# FASCICULE DE BREVET EUROPEEN

(11) **EP 1 509 705 B1**
(45) Date de publication et mention de la délivrance du brevet: **14.12.2005**
(21) Numéro de dépôt: 03756021.6
(22) Date de dépôt: 28.05.2003
(51) Int. Cl.: F16D 7/02

(54) **ACTIONNEUR A DEUX MOTEURS, UN REDUCTEUR DIFFERENTIEL ET UN LIMITEUR DE COUPLE**
STELLGLIED MIT ZWEI MOTOREN, EINEM UNTERSETZUNGSGETRIEBE UND EINEM DREHMOMENTBEGRENZER
ACTUATOR WITH TWO MOTORS, A DIFFERENTIAL REDUCER AND A TORQUE LIMITER

(30) Priorité: 31.05.2002 FR 0206743
(43) Date de publication de la demande: 02.03.2005
(73) Titulaire: MESSIER-BUGATTI, 78140 Velizy Villacoublay (FR)
(72) Inventeur: ZORDAN, Cédric, F-75016 Paris (FR)
(74) Mandataire: Blot, Philippe Robert Emile
(86) Numéro de dépôt international: PCT/FR2003/001622
(87) Numéro de publication internationale: WO 2003/102437

(56) Documents cités:
- FR-A- 1 604 664
- US-A- 1 953 510
- US-A- 4 834 319

## Description

La présente invention concerne un actionneur, du type comportant :
- deux moteurs d'entraînement,
- un organe de sortie,
- un réducteur différentiel à denture droite interposé entre les deux moteurs et l'organe de sortie, le réducteur différentiel comportant :
   - deux pignons solaires, chaque pignon solaire étant accouplé en rotation à un moteur d'entraînement,
   - un arbre de sortie autour duquel les axes des pignons solaires sont montés rotatifs,
   - un tambour porte-satellites lié à l'arbre de sortie pour son entraînement en rotation,
   - au moins une paire de pignons satellites portés par le tambour porte-satellites, et montés rotatifs sur eux-mêmes, chaque pignon satellite étant engrené avec un pignon solaire, les pignons satellites associés d'une même paire étant engrenés ensemble,
- un limiteur de couple interposé entre les deux moteurs et l'organe de sortie.

Un actioneur similaire est montré dans le document US 4 834 319.

Un tel actionneur est utilisé notamment pour le verrouillage du train d'atterrissage d'un avion en position escamotée.

Pour des raisons de fiabilité, l'actionneur comporte deux moteurs d'entraînement de l'organe de sortie. Entre ceux-ci est disposé un réducteur différentiel permettant l'entraînement de l'organe de sortie par les deux moteurs lorsque ceux-ci fonctionnent, même si leurs vitesses sont différentes. Grâce au réducteur différentiel, l'organe de sortie est entraîné par seulement l'un des moteurs, en cas de défaillance de l'autre moteur.

Afin d'éviter tout risque d'endommagement du mécanisme du train d'atterrissage, un limiteur de couple est prévu dans l'actionneur.

Basiquement, le limiteur de couple est réducteur différentiel.

La présence dans le même actionneur de deux moteurs d'entraînement, d'un réducteur différentiel et d'un limiteur de couple conduisent à ce que l'actionneur ait un encombrement important.

L'invention a pour but de proposer un actionneur doté de deux moteurs, d'un réducteur différentiel et d'un limiteur de couple, dont l'encombrement est réduit.

A cet effet, l'invention a pour objet un actionneur du type précité, caractérisé en ce que le limiteur de couple assure la liaison entre le tambour porte-satellites et l'arbre de sortie, lequel limiteur de couple est disposé entre les deux pignons solaires suivant l'axe de l'arbre de sortie.

Suivant des modes particuliers de réalisation, l'actionneur comporte en outre l'une ou plusieurs des caractéristiques suivantes :
- le limiteur de couple comporte des organes de friction solidaires en rotation de l'arbre de sortie et du tambour porte-satellites et des moyens de serrage des organes de friction les uns contre les autres ;
- les organes de friction présentent des surfaces de friction annulaires planes, et les moyens de serrage sont adaptés pour appliquer une force de serrage des surfaces les unes sur les autres suivant la direction de l'arbre de sortie ;
- l'arbre de sortie présente un appui axial et un tronçon fileté sur lequel est vissé un écrou, et les organes de friction sont engagés autour de l'arbre de sortie et sont maintenus enserrés entre l'appui axial et l'écrou ;
- au moins l'un de l'appui axial et de l'écrou est disposé en dehors de l'intervalle défini entre les deux pignons solaires, il comporte une entretoise engagée autour de l'arbre et assurant l'appui d'un organe de friction sur ledit au moins un de l'appui axial et de l'écrou et au moins un pignon solaire est monté rotatif autour de ladite entretoise ;
- le ou chaque organe de friction solidaire en rotation du tambour porte-satellites comporte un moyeu présentant des prolongements radiaux de solidarisation au porte-satellites délimitant entre eux des dégagements de réception des pignons satellites associés d'une même paire ; et
- le limiteur de couple comporte un unique organe de friction solidaire en rotation du tambour porte-satellites enserré entre deux organes de friction solidaires de l'arbre de sortie.

L'invention sera mieux comprise à la lecture de la description qui va suivre, donnée uniquement à titre d'exemple et faite en se référant aux dessins sur lesquels :
- la figure 1 est une vue en perspective avec arrachement partiel d'un actionneur selon l'invention ;
- la figure 2 est une vue en coupe longitudinale de l'actionneur de la figure 1 ;
- la figure 3 est une vue en perspective avec arrachement partiel du mécanisme de réduction différentielle et de limitation de couple de l'actionneur des figures 1 et 2 ;
- la figure 4 est une vue en perspective éclatée du mécanisme de la figure ; et
- la figure 5 est une vue en coupe longitudinale du mécanisme illustré sur les figures 3 et 4.

L'actionneur 10 illustré sur les figures est destiné au verrouillage d'un train d'atterrissage d'avion en position escamotée.

Cet actionneur comporte un carter 12 à l'intérieur duquel sont logés deux moteurs d'entraînement 14A, 14B, chacun relié mécaniquement à un mécanisme 15 de réduction différentielle et de limitation de couple. Ce mécanisme comporte un réducteur différentiel 16 intégrant un limiteur de couple 18. L'actionneur comporte en outre un réducteur épicycloïdal 20 entraîné par le mécanisme 15 et un organe rotatif de sortie 22 émergeant du boîtier 12 et qui est entraîné lui-même par le réducteur épicycloïdal 20.

Plus précisément, les deux moteurs 14A, 14B sont constitués de moteurs électriques dont les stators 24A, 24B sont solidaires du carter 12 et dont les rotors 26A, 26B sont mobiles à rotation autour d'axes Y1-Y1 et Y2-Y2 s'étendant parallèlement l'un à l'autre.

Les arbres de sortie 28A, 28B des moteurs entraînent des premier et second pignons solaires moteurs 30A, 30B du réducteur différentiel 16. Ces pignons solaires moteurs sont rotatifs autour d'un même axe principal X-X s'étendant parallèlement aux axes Y1-Y1 et Y2-Y2 des moteurs.

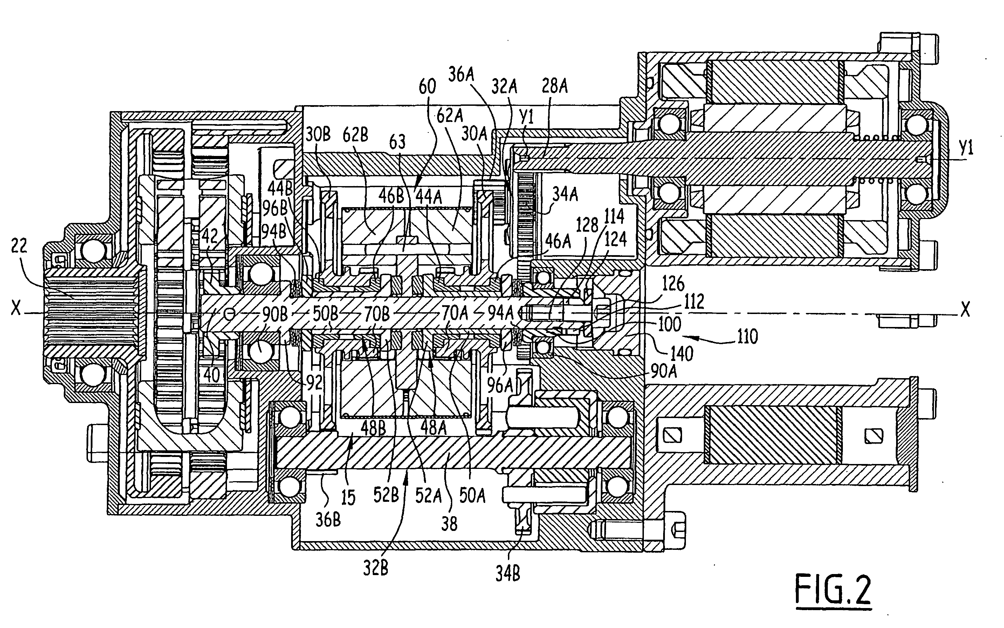

Comme illustré sur la figure 2, l'arbre de sortie 28A du moteur est accouplé au pignon solaire moteur 30A pour son entraînement en rotation par un étage de réduction 32A constitué de deux pignons coaxiaux et solidaires 34A, 36A ayant des diamètres distincts.

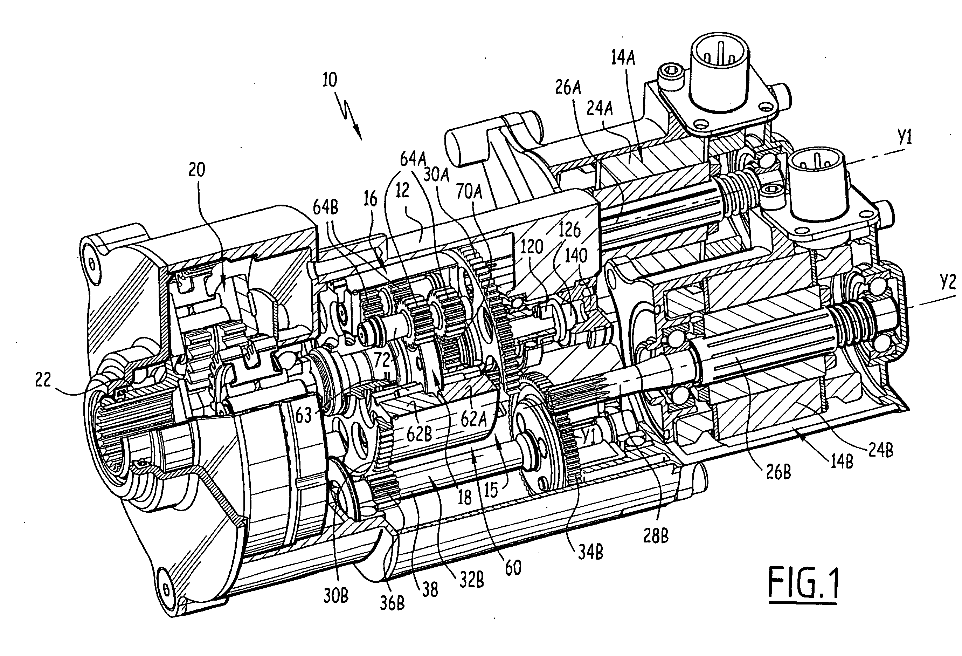

De même, et comme illustré sur la figure 1, l'arbre de sortie 28B du moteur est accouplé en rotation avec le pignon solaire moteur 30B par un étage de réduction 32B constitué de deux pignons coaxiaux de diamètre différents 34B, 36B solidarisés par un arbre 38.

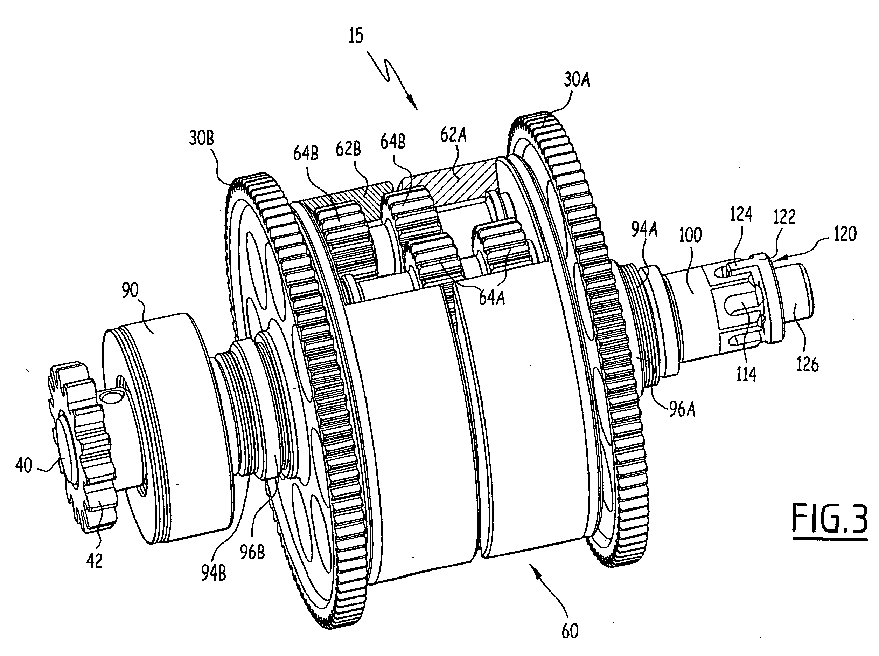

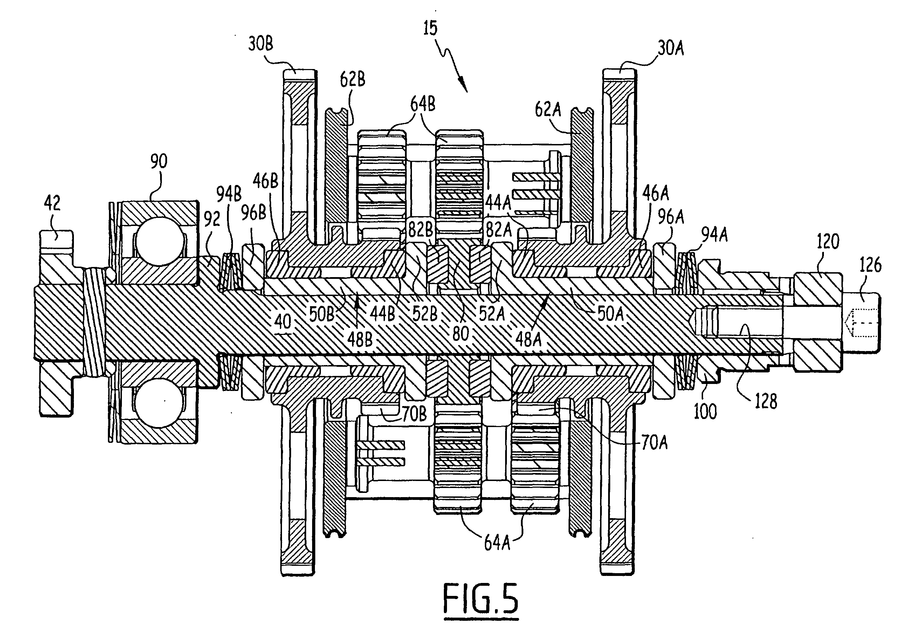

Le mécanisme 15 de réduction différentielle de vitesse et de limitation de couple est représenté seul sur les figures 3 à 5. Il présente un arbre de sortie 40 s'étendant suivant l'axe X-X. Cet arbre présente à une première extrémité un pignon de sortie 42 propre à entraîner le réducteur épicycloïdal 20.

Les deux pignons solaires moteurs 30A, 30B sont montés libres en rotation autour de l'arbre de sortie 40. Les axes des pignons 30A, 30B et de l'arbre de sortie 40 sont identiques. Les pignons 30A, 30B sont supportés par cet arbre et sont guidés en rotation autour de celui-ci par des paliers lisses ou roulements 44A, 46A et 44B, 46B présentant des épaulements latéraux de maintien axial.

Entre ces paliers et l'arbre 40 sont disposés des mors de serrage 48A, 48B. Ces mors sont constitués de manchons 50A, 50B prolongés à leurs extrémités en regard par des collerettes 52A, 52B venues de matière. Les mors 48A, 48B sont liés en rotation à l'arbre 40 mais sont libres de coulisser en translation suivant sa longueur. A cet effet, des profils complémentaires tels que des méplats sont ménagés sur la surface extérieure de l'arbre 40 et sur la surface intérieure des mors 48A, 48B.

Le réducteur différentiel 16 comporte, entre les deux pignons solaires moteurs 30A, 30B, un porte-satellites 60 constitué de deux flasques 62A, 62B solidarisés en rotation l'un à l'autre par des goupilles et des vis 63. Entre les deux flasques 62A, 62B du porte-satellites sont montées des paires de pignons satellites 64A, 64B engrenés l'un avec l'autre et chacun engrené avec un pignon solaire menant de petite taille 70A, 70B solidaire du pignon satellite moteur respectivement 30A et 30B.

Chaque pignon satellite est en fait formé de deux engrenages identiques coaxiaux et solidaires, portés par un arbre 72 avec lequel ils sont venus de matière.

Les arbres 72 sont rotatifs sur eux-mêmes par rapport aux flasques 62A, 62B entre lesquels ils sont maintenus par l'intermédiaire de paliers 74. Les arbres 72 s'étendent parallèlement les uns aux autres et parallèlement à l'axe X-X de l'arbre de sortie 40. Les axes des arbres 72 sont différents de l'axe X-X, de sorte que les pignons satellites 64A, 64B peuvent tourner ensemble globalement autour de l'axe X-X.

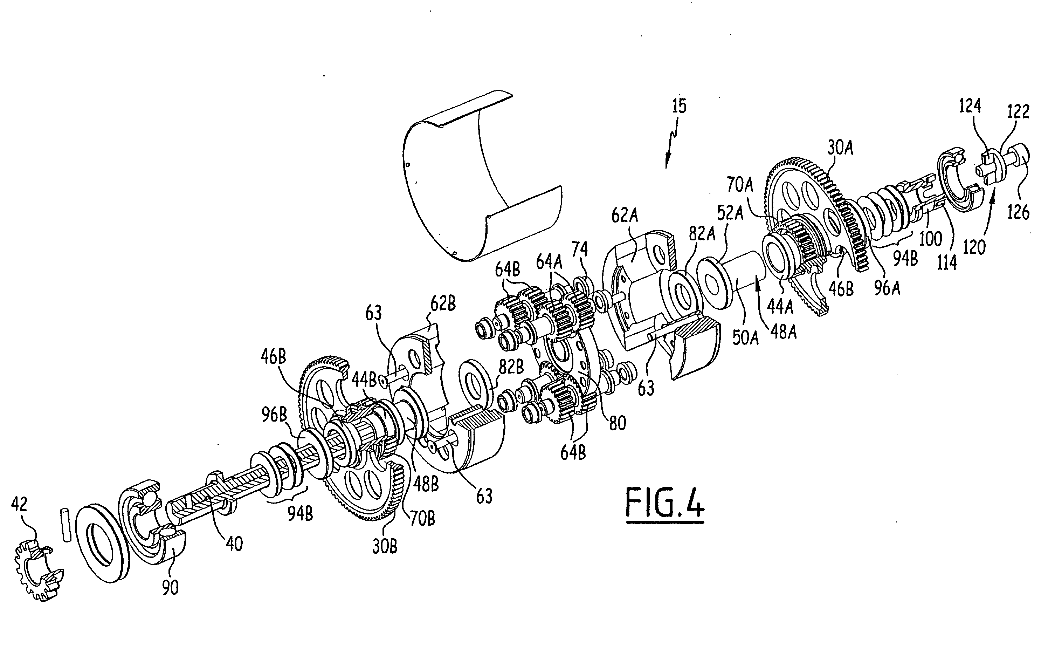

Un moyeu 80 est solidarisé en rotation au porte-satellites 60 par les goupilles 63. Ce moyeu est monté rotatif autour de l'arbre 40. Il est disposé entre les deux pignons solaires moteurs 30A, 30B. Le moyeu 80 est visible plus clairement sur la figure 4. Il présente une forme plane avec un coeur généralement annulaire prolongé par deux oreilles latérales diamétralement opposées au travers desquelles passent les goupilles 33. Les pignons 64A, 64B sont disposés autour du coeur dans les dégagements ménagés entre les oreilles latérales.

Le moyeu 80 comporte deux rondelles de friction 82A, 82B rapportées par collage sur ses surfaces planes opposées. Elles sont maintenues comprimées entre les collerettes 52A, 52B des mors 48A, 48B, ces collerettes formant des organes de frictions propres à coopérer avec les rondelles de friction suivant des surfaces annulaires planes.

L'arbre de sortie 40 est supporté par des roulements à billes 90A, 90B disposés de part et d'autre du mécanisme 15. Ces roulements à billes sont supportés par le carter 12. L'arbre 40 présente une collerette 92 propre à prendre appui axialement sur le roulement à billes 90 lequel s'appuie axialement sur un épaulement du carter 12.

Le moyeu 80 est enserré axialement entre les deux mors 48A 48B. Le mors 48B est en appui sur la collerette 92 par l'intermédiaire d'un empilement de rondelles Belleville 94B et d'une rondelle rigide 96B.

Le mors 48A est pressé par une rondelle rigide 96A et un empilement de rondelles Belleville 94A. Cet empilement porté par l'arbre 40 est retenu serré par un écrou 100 vissé et centré sur la seconde extrémité de l'arbre 40 opposée à celle portant sur le pignon 42. Le roulement à billes 90A est engagé autour de cet écrou 100 sur une longueur de ce dernier présentant extérieurement une surface lisse.

Ainsi, l'écrou 100 assure un maintien axial, du moyeu 80 enserré entre les deux mors 48A, 48B. Ces derniers sont sollicités l'un vers l'autre par les rondelles Belleville 94A, 94B, au travers des rondelles d'appui 96A, 96B. Les rondelles Belleville sont maintenues comprimées d'un côté par la collerette 92 et de l'autre côté par l'écrou 100.

En fonction du serrage de l'écrou 100, les rondelles Belleville sont plus ou moins comprimées et la pression qu'elles exercent sur les mors 48A, 48B peut être ajustée de sorte que la force de frottement entre les mors 48A, 48B et les rondelles de friction 82A, 82B est modifiée.

Pour le réglage de la force de friction, le carter 12 présente une ouverture 110 ménagée dans le prolongement de l'arbre de sortie 40 permettant l'accès à l'écrou 100 et sa manoeuvre avec une clé. Pour assurer l'immobilisation de l'écrou, l'arbre 40 présente, à sa seconde extrémité portant l'écrou, des encoches transversales 112 débouchant au bout de l'arbre. Les encoches sont par exemple au nombre de trois. Des encoches correspondantes 112, 114 sont ménagées dans l'écrou 110. Elles débouchent également au bout de l'écrou.

Un organe de blocage 120 constitué d'une couronne 122 portant deux doigts de blocage 124 est engagé au bout de l'arbre de sorte que les doigts soient reçus dans des encoches radiales correspondantes ménagées à l'extrémité de l'arbre 40 et dans l'écrou 100.

Une vis-126 est engagée dans un trou taraudé 128 ménagé axialement au bout de l'arbre. Elle traverse l'organe de blocage 120 et assure sa retenue.

L'ouverture 110 est obturée par un bouchon de protection amovible et étanche 140.

L'actionneur fonctionne de la manière suivante.

Lorsque les deux moteurs tournent à la même vitesse, les deux pignons solaires moteurs 30A, 30B sont entraînés dans le même sens. Ainsi les pignons satellites 64A, 64B associés d'une même paire sont immobiles l'un par rapport à l'autre. Le porte-satellites 60 est entraîné en rotation par les pignons satellites, eux-mêmes entraînés en rotation autour de l'arbre X-X par les pignons solaires menants 70A, 70B.

Le moyeu 80 se trouve alors entraîné en rotation avec le porte-satellites 60.

Le couple fourni par les moteurs est transmis du moyeu 80 à l'arbre 40, tant que la force de frottement exercée entre les mors de serrage 48A, 48B et les rondelles de friction 82A, 82B est supérieure au couple fourni par les moteurs.

Si ce couple fourni par le moteur est supérieur à la force de frottement imposée par friction, les rondelles de friction glissent sur les surfaces de frictions des mors, de sorte que seule une partie du couple est transmise. Aussi, le moyeu enserré entre les organes de serrage 48A 48B forme un limiteur de couple intégré entre les deux pignons solaires moteurs 30A 30B.

Si l'un des moteurs tourne à une vitesse différente de l'autre moteur, ou que l'un des moteurs est arrêté, les deux pignons solaires menants 70A, 70B tournent à des vitesses différentes de sorte que les pignons satellites 64A, 64B sont entraînés en rotation sur eux-mêmes dans des sens opposés compensant la différence de vitesse de rotation des deux moteurs. Le porte-satellites 60 est alors entraîné à une vitesse moyenne comprise entre les vitesses des deux pignons planétaires moteurs 30A, 30B entraînant alors l'arbre 40 à cette vitesse tant que le couple fourni par les moteurs est inférieur au couple de frottement imposé par les surfaces de friction en contact.

Comme connu en soi, l'arbre 40 entraîne l'organe de commande 22 au travers du réducteur épicycloïdal 20.

Le limiteur de couple étant interposé entre les deux pignons solaires moteurs 30A, 30B, l'encombrement du mécanisme de réduction et de limitation de couple est réduit, ce qui permet d'obtenir un actionneur ayant un faible encombrement général.

Pour assurer le réglage du limiteur de couple, le bouchon 110 est retiré permettant ainsi d'accéder à la vis 126. Celle-ci est retirée ainsi que l'organe de blocage 120. L'écrou 100 est vissé ou dévissé afin d'assurer une force de serrage adaptée des deux mors 48A, 48B sur les rondelles de friction 82A, 82B.

Après ajustement de la position de l'écrou, l'organe de blocage 120 est réengagé dans des encoches correspondantes 114, 116 de l'écrou et de l'extrémité de l'arbre et la vis 126 est resserrée pour assurer un maintien axial de l'organe de blocage 120. Le bouchon 140 est enfin remise en place pour assurer l'étanchéité du carter.

On comprend ainsi que dans un tel actionneur, le limiteur de couple peut être calibré après montage de l'ensemble de l'actionneur, permettant ainsi de tenir compte des frottements et des pertes de rendement induites par les différents éléments engrenés constituant l'actionneur, et notamment les pignons du réducteur épicycloïdal 20. Ainsi, le couple maximal de sortie de l'actionneur mesuré au niveau de l'organe de sortie 22 peut être défini de manière précise quelle que soit la qualité des usinages des différents éléments mobiles de l'actionneur.

## Revendications

1. Actionneur comportant :
- deux moteurs d'entraînement (14A, 14B),
- un organe de sortie (22),
- un réducteur différentiel (16) à denture droite interposé entre les deux moteurs (14A, 14B) et l'organe de sortie (22), le réducteur différentiel (16) comportant :
• deux pignons solaires (30A, 70A, 30B, 70B), chaque pignon solaire étant accouplé en rotation à un moteur d'entraînement (14A, 14B)
• un arbre de sortie (40) autour duquel les axes des pignons solaires (30A, 70A, 30B, 70B) sont montés rotatifs,
• un tambour porte-satellites (60) lié à l'arbre de sortie (40) pour son entraînement en rotation,
• au moins une paire de pignons satellites (64A, 64B) portés par le tambour porte-satellites (60), et montés rotatifs sur eux-mêmes, chaque pignon satellite (64A, 64B) étant engrené avec un pignon solaire (30A, 70A, 30B, 70B), les pignons satellites (64A, 64B) associés d'une même paire étant engrenés ensemble,
- un limiteur de couple (18) interposé entre les deux moteurs (14A, 14B) et l'organe de sortie (22),
**caractérisé en ce que** le limiteur de couple (18) assure la liaison entre le tambour porte-satellites (60) et l'arbre de sortie (40), lequel limiteur de couple (18) est disposé entre les deux pignons solaires (30A, 70A, 30B, 70B) suivant l'axe de l'arbre de sortie (40).

2. Actionneur selon la revendication 1, **caractérisé en ce que** le limiteur de couple (18) comporte des organes de friction (80, 82A, 82B, 52A, 52B) solidaires en rotation de l'arbre de sortie (40) et du tambour porte-satellites (60) et des moyens (92, 94A, 94B, 100) de serrage des organes de friction (80, 82A, 82B, 52A, 52B) les uns contre les autres.

3. Actionneur selon la revendication 2, **caractérisé en ce que** les organes de friction (82A, 82B, 52A, 52B) présentent des surfaces de friction annulaires planes, et **en ce que** les moyens de serrage (92, 94A, 94B, 100) sont adaptés pour appliquer une force de serrage des surfaces les unes sur les autres suivant la direction de l'arbre de sortie (40).

4. Actionneur selon la revendication 3, **caractérisé en ce que** l'arbre de sortie (40) présente un appui axial (92) et un tronçon fileté sur lequel est vissé un écrou (100), et **en ce que** les organes de friction (80, 82A, 82B, 52A, 52B) sont engagés autour de l'arbre de sortie (40) et sont maintenus enserrés entre l'appui axial (92) et l'écrou (100).

5. Actionneur selon la revendication 4, **caractérisé en ce que** au moins l'un de l'appui axial (92) et de l'écrou (100) est disposé en dehors de l'intervalle défini entre les deux pignons solaires (30A, 70A, 30B, 70B), **en ce que** il comporte une entretoise (50A, 50B) engagée autour de l'arbre et assurant l'appui d'un organe de friction (52A, 52B) sur ledit au moins un de l'appui axial (92) et de l'écrou (100) et **en ce que** au moins un pignon solaire (30A, 70A, 30B, 70B) est monté rotatif autour de ladite entretoise (50A, 50B).

6. Actionneur selon une quelconque des revendications 2 à 5, **caractérisé en ce que** le ou chaque organe de friction (82A, 82B) solidaire en rotation du tambour porte-satellites (60) comporte un moyeu (80) présentant des prolongements radiaux de solidarisation au porte-satellites (60) délimitant entre eux des dégagements de réception des pignons satellites associés d'une même paire.

7. Actionneur selon l'une quelconque des revendications 3 à 6, **caractérisé en ce que** le limiteur de couple (18) comporte un unique organe de friction (82A, 82B) solidaire en rotation du tambour porte-satellites (60) enserré entre deux organes de friction (52A, 52B) solidaires de l'arbre de sortie (40).

## Patentansprüche

1. Betätigungsgerät, umfassend:
- zwei Antriebsmotoren (14A, 14B),
- ein Ausgangsorgan (22),
- ein geradverzahntes Differentialgetriebe mit Untersetzung (16), zwischen den beiden Motoren (14A, 14B) und dem Ausgangsorgan (22) angeordnet, wobei das Differentialgetriebe (16) umfasst:
• zwei Sonnenräder (30A, 70A, 30B, 70B), wobei jedes Sonnenrad zur Rotation an einen Antriebsmotor (14A, 14B) gekuppelt ist,
• eine Abtriebswelle (40), um die die Achsen der Sonnenräder (30A, 70A, 30B, 70B) drehbar montiert sind,
• eine Planetenträger-Trommel (60), die mit der Abtriebswelle (40) für deren Rotationsantrieb verbunden ist,
• mindestens ein Paar Planetenräder (64A, 64B), die von der Planetenträger-Trommel (60) getragen werden und um sich selbst rotierend montiert sind, wobei jedes Planetenrad (64A, 64B) mit einem Sonnenrad (30A, 70A, 30B, 70B) in Eingriff steht, wobei die zusammengehtirenden Planetenräder (64A, 64B) desselben Paares miteinander in Eingriff stehen,
- einen Drehmomentbegrenzer (18), der zwischen den beiden Motoren (14A, 14B) und dem Ausgangsorgan (22) angeordnet ist, **dadurch gekennzeichnet, dass** der Drehmomentbegrenzer (18) die Verbindung zwischen der Planetenträger-Trommel (60) und der Abtriebswelle (40) sicherstellt, wobei dieser Drehmomentbegrenzer (18) zwischen den beiden Sonnenrädern (30A, 70A, 30B, 70B) um die Achse der Abtriebswelle (40) angeordnet ist angeordnet ist.

2. Betätigungsgerät nach Patentanspruch 1, **dadurch gekennzeichnet, dass** der Drehmomentbegrenzer (18) Reiborgane (80, 82A, 82B, 52A, 52B) aufweist, die drehstarr mit der Abtriebswelle (40) und der Planetenträger-Trommel (60) und den Mitteln (92, 94A, 94B, 100) zum Gegeneinanderdrücken der Reiborgane (80, 82A, 82B, 52A, 52B) verbunden sind.

3. Betätigungsgerät nach Patentanspruch 2, **dadurch gekennzeichnet, dass** die Reiborgane (82A, 82B, 52A, 52B) ringförmige, ebene Reibflächen aufweisen und **dadurch**, dass die Spannorgane (92, 94A, 94B, 100) dafür eingerichtet sind, eine Kraft zum Gegeneinanderdrücken der Oberflächen in Richtung der Abtriebswelle (40) auszuüben.

4. Betätigungsgerät nach Patentanspruch 3, **dadurch gekennzeichnet, dass** die Abtriebswelle (40) eine axiale Abstützung (92) aufweist und einen gewindeten Abschnitt, auf den eine Mutter (100) geschraubt ist, und **dadurch**, dass die Reiborgane (80, 82A, 82B, 52A, 52B) um die Abtriebswelle (40) angebracht sind und zwischen der axialen Abstützung (92) und der Mutter (100) eingespannt gehalten werden.

5. Betätigungsgerät nach Patentanspruch 4, **dadurch gekennzeichnet, dass** mindestens eins von beiden, die axiale Abstützung (92) oder die Mutter (100), außerhalb des Zwischenraumes zwischen den beiden Sonnenrädern (30A, 70A, 30B, 70B) angeordnet ist, **dadurch**, dass sie eine Abstandshülse (50A, 50B) aufweist, die um die Welle angeordnet ist und die Abstützung eines Reiborgans (52A, 52B) am genannten mindestens einen von beiden, der axialen Abstützung (92) oder der Mutter (100), sicherstellt, und **dadurch**, dass mindestens ein Sonnenrad (30A, 70A, 30B, 70B) um die genannte Abstandshülse (50A, 50B) drehbar montiert ist.

6. Betätigungsgerät nach irgendeinem der Patentansprüche 2 bis 5, **dadurch gekennzeichnet, dass** das oder jedes Reiborgan (82A, 82B), drehstarr mit der Planetenträger-Trommel (60) verbunden, eine Nabe (80) trägt, die radiale Verlängerungen zur Befestigung am Planetenträger (60) aufweist, die zwischen sich Aufnahmeausnehmungen für die zusammengehörenden Planetenräder desselben Paares begrenzen.

7. Betätigungsgerät nach irgendeinem der Patentansprüche 3 bis 6, **dadurch gekennzeichnet, dass** der Drehmomentbegrenzer (18) ein einziges Reiborgan (82A, 82B), drehstarr mit der Planetenträger-Trommel (60) verbunden und zwischen zwei Reiborganen (52A, 52B) eingespannt, die mit der Abtriebswelle (40) fest verbunden sind, umfasst.

## Claims

1. Actuator made up of:
- two drive motors (14A, 14B),
- an output device (22),
- a differential reducer (16) with straight teeth interposed between the two motors (14A, 14B) and the output device (22), with the differential reducer (16) being made up of:
two sun gears (30A, 70A, 30B, 70B), with each sun gear being coupled in rotation to a drive motor (14A, 14B)
an output shaft (40) around which the shafts of the sun gears (30A, 70A, 30B, 70B) are mounted so as to rotate,
a planet carrier drum (60) connected to the output shaft (40) so that it is driven in rotation,
at least one pair of planet wheels (64A, 64B) carried by the planet carrier (60), and mounted so as to rotate on each other, with each planet wheel (64A, 64B) meshing with a sun gear (30A, 70A, 30B, 70B), with the associated planet wheels (64A, 64B) in each pair meshing together,
a torque limiter (18) interposed between the two motors (14A, 14B) and the output device (22), **characterised by** the fact that this torque limiter (18) links the planet carrier drum (60) to the output shaft (40), with the torque limiter (18) being located between the two sun gears (30A, 70A, 30B, 70B) along the axis of the output shaft (40).

2. Actuator as described in claim 1, **characterised by** the fact that the torque limiter (18) is made up of friction elements (80, 82A, 82B, 52A, 52B) which are firmly fixed in terms of rotation to the output shaft (40) and to the planet carrier drum (60), and means (92, 94A, 94B, 100) of pressing the friction elements (80, 82A, 82B, 52A, 52B) against each other.

3. Actuator as described in claim 2, **characterised by** the fact that the friction elements (82A, 82B, 52A, 52B) have flat annular friction surfaces, and by the fact that the means of exerting pressure (92, 94A, 94B, 100) are designed to apply a force which presses the surfaces against each other along the direction of the output shaft (40),

4. Actuator as described in claim 3, **characterised by** the fact that the output shaft (40) possesses an axial support (92) and a threaded stub onto which a nut (100) is screwed, and by the fact that the friction elements (80, 82A, 82B, 52A, 52B) are fitted around the output shaft (40) and are kept pressed between the axial support (92) and the nut (100).

5. Actuator as described in claim 4, **characterised by** the fact that at least one of the axial support (92) and the nut (100) are located outside the gap defined between the two sun wheels (30A, 70A, 30B, 70B), by the fact that it includes a spacer (50A, 50B) fitted around the shaft and supporting a friction element (52A, 52B) on at least one of the said axial supports (92) and/or nut (100) and by the fact that at least one sun gear (30A, 70A, 30B, 70B) is mounted so as to rotate around the aforementioned spacer (50A, 50B).

6. Actuator as described in any of claims 2 to 5 whatsoever, **characterised by** the fact that the or each friction element (82A, 82B) fixed in terms of rotation to the planet carrier drum (60) includes a hub (80) which has radial extensions fixing it to the planet carrier (60) which demarcate the location spaces for the planet wheels associated in a given pair.

7. Actuator as described in any of claims 3 to 6 whatsoever, **characterised by** the fact that the torque limiter (18) includes a single friction element (82A, 82B) which is fixed in terms of rotation to the planet carrier drum (60) pressed between two friction elements (52A, 52B) fixed to the output shaft (40).
